# EUROPEAN PATENT APPLICATION

(11) **EP 4 012 673 A1**
(43) Date of publication of application: **15.06.2022**
(21) Application number: 20869771.4
(22) Date of filing: 28.05.2020
(51) Int. Cl.: G07C 5/00, G08G 1/00, G01C 21/26

(54) **VEHICLE ELECTRONIC APPARATUS CONTROL DEVICE, VEHICLE ELECTRONIC APPARATUS, VEHICLE CONTROL METHOD, AND PROGRAM**

(30) Priority: 25.09.2019 JP 2019174633
(71) Applicant: JVCKenwood Corporation, Yokohama-shi, Kanagawa 2210022 (JP)
(72) Inventor: SUGATA, Akinori, Yokohama-shi, Kanagawa 221-0022 (JP); MURAKAMI, Yukihiko, Yokohama-shi, Kanagawa 221-0022 (JP); KOJIMA, Tomoki, Yokohama-shi, Kanagawa 221-0022 (JP)
(74) Representative: Schmidbauer, Andreas Konrad
(86) International application number: PCT/JP2020/021256
(87) International publication number: WO 2021/059591

(57) **Abstract**

To appropriately determine a function of a vehicle electronic device according to an area corresponding to a current position of a vehicle. A vehicle electronic device control device 20 includes a position information acquisition unit 21 configured to acquire position information of a current position of a vehicle; an area identification unit 23 configured to identify an area corresponding to the current position of the vehicle based on the position information acquired by the position information acquisition unit 21 and map information containing information for identifying a border of a given area on a map; and a determination unit 25 configured to determine, based on a determination table in which control on a function of a vehicle electronic device is specified for each area, control on a function of the vehicle electronic device in the area of the vehicle identified by the area identification unit 23.

## Description

### Field

The present invention relates to a vehicle electronic device control device, a vehicle electronic device, a vehicle control method, and a program. Background

A technology of changing a maximum acceleration at which a driving recorder performs shooting and recording to a by shooting to a restricted maximum acceleration when it is determined that a vehicle is in a restriction area, such as the premises of a company, is known (for example, refer to Patent Literature 1).

### Citation List

### Patent Literature

Patent Literature 1: Japanese Patent No. 5459044 Summary

### Technical Problem

For example, there is an area where shooting and recording by a vehicle electronic device that is what is called a driving recorder, or the like, are regulated by law. In the regulated area, because running the regulated function is illegal, it is desirable that the function of the vehicle electronic device be controlled appropriately according to the area.

The present disclosure has been made in view of the above-described circumstances and an object of the present disclosure is to determine a function of a vehicle electronic device appropriately according to an area corresponding to the current position of a vehicle.

### Solution to Problem

In order to solve the above-mentioned problem and achieve the object, a vehicle electronic device control device according to the present disclosure includes: a position information acquisition unit configured to acquire position information of a current position of a vehicle; an area identification unit configured to identify an area corresponding to the current position of the vehicle based on the position information acquired by the position information acquisition unit and map information including information for identifying a border of a given area on a map; and a determination unit configured to determine, based on a determination table in which control on a function of a vehicle electronic device is specified for each area, control on a function of the vehicle electronic device in the area of the vehicle identified by the area identification unit.

A vehicle electronic device according to the present disclosure includes: the above-described vehicle electronic device control device; and an imaging unit configured to shoot surroundings of the vehicle.

A vehicle control method according to the present disclosure includes: a position information acquisition step of acquiring position information of a current position of a vehicle; an area identification step of identifying an area corresponding to the current position of the vehicle based on the position information acquired at the position information acquisition step and map information including information for identifying a border of a given area on a map; and a determination step of determining, based on a determination table in which control on a function of a vehicle electronic device is specified for each area, control on a function of the vehicle electronic device in the area of the vehicle identified at the area identification step.

A program according to the present disclosure causes a computer that runs as a vehicle electronic device control device to execute: a position information acquisition step of acquiring position information of a current position of a vehicle; an area identification step of identifying an area corresponding to the current position of the vehicle based on the position information acquired at the position information acquisition step and map information including information for identifying a border of a given area on a map; and a determination step of determining, based on a determination table in which control on a function of a vehicle electronic device is specified for each area, control on a function of the vehicle electronic device in the area of the vehicle identified at the area identification step.

### Advantageous Effects of Invention

According to the present disclosure, an effect that it is possible to determine a function of a vehicle electronic device appropriately according to an area corresponding to the current position of a vehicle is achieved.

### Brief Description of Drawings

FIG. 1 is a block diagram illustrating an example of a configuration of a vehicle recording device including a vehicle electronic device control device according to a first embodiment.
FIG. 2 is a diagram illustrating an example of a determination table and is a diagram illustrating a determination table that specifies whether shooting and recording are permitted with respect to each area.
FIG. 3 is a flowchart illustrating an example of a flow of a process in the vehicle electronic device control device according to the first embodiment.
FIG. 4 is a diagram illustrating an example of a determination table and is a diagram illustrating a determination table that specifies a frame rate with respect to each area.
FIG. 5 is a flowchart illustrating an example of a flow of a process in a vehicle electronic device control device according to a second embodiment.
FIG. 6 is a diagram illustrating an example of a determination table and is a diagram illustrating a determination table that specifies a time zone with respect to each area.
FIG. 7 is a flowchart illustrating an example of a flow of a process in a vehicle electronic device control device according to a third embodiment.
FIG. 8 is a diagram illustrating an example of a determination table and is a diagram illustrating a determination table that specifies a unit of rate with respect to each area.
FIG. 9 is a flowchart illustrating an example of a flow of a process in a vehicle electronic device control device according to a fourth embodiment.
FIG. 10 is a diagram illustrating an example of a determination table and is a diagram illustrating a determination table that specifies a file name with respect to each area.
FIG. 11 is a flowchart illustrating an example of a flow of a process in a vehicle electronic device control device according to a fifth embodiment.
FIG. 12 is a diagram illustrating an example of a determination table and is a diagram illustrating a determination table that specifies areas where shooting is kept performed.
FIG. 13 is flowchart illustrating an example of a flow of a process in a vehicle electronic device control device according to a sixth embodiment.

### Description of Embodiments

Embodiments of a vehicle electronic device control device, a vehicle electronic device, a vehicle control method and a program will be described in detail below with reference to the accompanying drawings. The embodiments below do not limit the present invention. In the embodiments, the vehicle electronic device is described as a vehicle recording device 10.

### First Embodiment

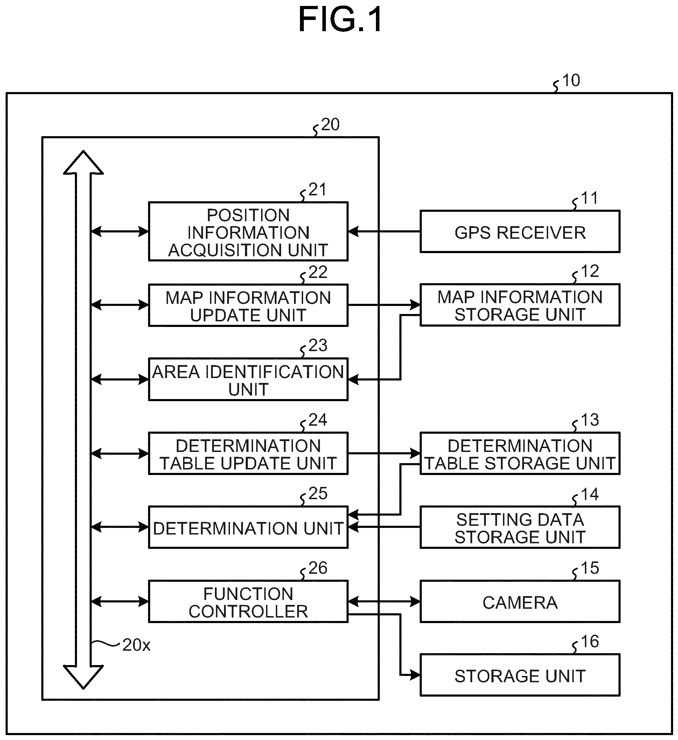

FIG. 1 is a block diagram illustrating an example of a configuration of the vehicle recording device 10 including a vehicle electronic device control device 20 according to a first embodiment. Control on whether to permit shooting and recording is performed on the vehicle recording device 10 according to an area corresponding to the current position of a vehicle. The vehicle recording device 10 includes a GPS (Global Positioning System) receiver 11 that is an example of a GNSS (Global Navigation Satellite System), a map information storage unit 12, a determination table storage unit 13, a setting data storage unit 14, a camera (imaging unit) 15, a storage unit 16, and the vehicle electronic device control device 20.

The GPS receiver 11 consists of a GPS receiver circuit, a GPS receiving antenna, etc., and receives GPS signals. The GPS receiver 11 outputs the received GPS signals to a position information acquisition unit 21.

The map information storage unit 12 stores map information. The map information is information for identifying an area corresponding to the current position of the vehicle. The map information may be only information that makes it possible to identify the border of a region (area) including a country, a prefecture, a municipality, a state a district, or the like. The map information only have to be information that presents the border of the area and that makes it possible to identify the outline of the area. The map information may be, for example, information not containing information on roads, information on geographies, and information on buildings or facilities, such as detailed map information that is used by, for example, a so-called navigation system. The map information storage unit 12 may be not included in the configuration of the vehicle recording device 10 and acquisition from an external storage device that is connected via a communication unit not illustrated in the drawing may be enabled.

An area refers to a region representing a given area, such as a country, a prefecture, a municipality, a state or a district, in which, for example, laws, rules, or the like, are established. In the embodiment, an area refers to, for example, a region, such as a country, a prefecture, a municipality, a state or a district, in which laws, rules, or the like, that specify whether shooting and recording by a vehicle recording device that is what is called a driving recorder are permitted are established.

In the map information storage unit 12, a data update is enabled by a map information update unit 22. The data in the map information storage unit 12 is updated every time the border of the area is changed, every time the laws, rules, or the like, are revised, or at any timing.

The determination table storage unit 13 is a database that stores a determination table that specifies control on a function of the vehicle recording device 10 with respect to each area. In the present embodiment, the determination table storage unit 13 is a database that stores a determination table that specifies control on a shooting and recording function of the vehicle recording device 10 with respect to each area. In the determination table, for example, data that makes it possible to determine areas where shooting and recording by a vehicle recording device that is what is called a driving recorder, or the like, are regulated by law is stored.

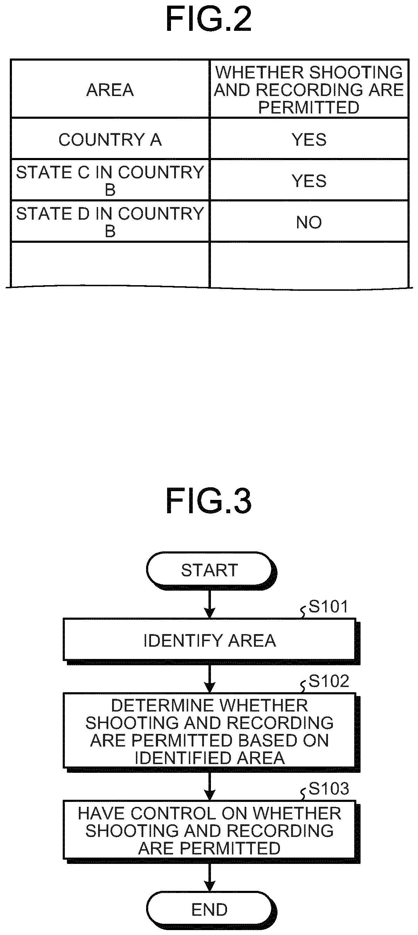

FIG. 2 is a diagram illustrating an example of a determination table and is a diagram illustrating a determination table that specifies whether shooting and recording are permitted with respect to each area. The determination table, for example, stores the fact that "shooting and recording are permitted" in an area "Country A", "shooting and recording are permitted" in an area "State C in Country B", "shooting and recording are not permitted" in an area "State D in Country B", etc. In the example illustrated in FIG. 2, the fact that "shooting and recording are permitted" in the area "Country A" on a country basis. Thus, "shooting and recording are permitted" also in areas, such as states that belong to "Country A". As for the area "Country B", the fact that "shooting and recording are permitted" on a state basis.

In the determination table storage unit 13, a data update is enabled by a determination table update unit 24. The data in the determination table storage unit 13 is updated every time control on the shooting and recording function of the vehicle recording device 10 in the area is changed or at any timing.

The setting data storage unit 14 stores setting data on control on the function of the vehicle recording device 10 with respect to each area, which is setting data that is set by a user. In the present embodiment, the setting data storage unit 14 stores setting data that is set by the user and that specifies control on the shooting and recording function of the vehicle recording device 10 with respect to each area.

The camera 15 is a camera that shoots the surroundings of the vehicle. The camera 15 performs omnidirectional shooting around the vehicle. The camera 15 is, for example, arranged at the front of the vehicle and shoots the surroundings around the front of the vehicle. In the camera 15, processing relating to shooting and saving is controlled by a function controller 26. More specifically, in the camera 15, the start of shooting and the end of shooting are controlled according to a control signal from the function controller 26. The video data captured by the camera 15 is saved in the storage unit 16 according to a control signal from the function controller 26. The video data is a moving image consisting of images of 30 frames per second.

The storage unit 16 records various types of data in the vehicle recording device 10. The storage unit 16, for example, records video data that is captured by the camera 15 while the vehicle is traveling and the vehicle is parked. The storage unit 16 can be implemented by a semiconductor memory device, such as a RAM (Random Access Memory) or a flash memory, or a storage device, such as a hard disk or a solid state drive. The storage unit 16 may consist of a plurality of different memories. Alternatively, the storage unit 16 may be an external storage device that is connected by radio via a communication device not illustrated in the drawing. The storage unit 16 stores video data based on a control signal that is output from the function controller 26.

The vehicle electronic device control device 20 performs control on whether shooting and recording performed by the vehicle recording device 10 are permitted according to the area corresponding to the current position of the vehicle. The vehicle electronic device control device 20 is, for example, an arithmetic processing unit consisting of a CPU (Central Processing Unit), etc. The vehicle electronic device control device 20 loads a program that is stored in a storage unit not illustrated in the drawing into a memory and executes instructions contained in the program. The vehicle electronic device control device 20 includes the position information acquisition unit 21, the map information update unit 22, an area identification unit 23, the determination table update unit 24, a determination unit 25, and a function controller 26. An internal memory not illustrated in the drawing is included in the vehicle electronic device control device 20 and the internal memory is used to temporarily store data in the vehicle electronic device control device 20.

The position information acquisition unit 21 acquires position information presenting the current position of the vehicle. Based on radio waves that are received by the GPS receiver 11, the position information acquisition unit 21 calculates position information of the current position of the vehicle by a known method. The position information acquisition unit 21 may calculate position information of the current position of the vehicle, using another positioning system including a quasi-Zenith Satellites. The position information is specified by information necessary to estimate a position, such as the latitude, longitude and altitude.

The map information update unit 22 updates the map information that is stored in the map information storage unit 12. The map information update unit 22 updates the data every time the border of the area is changed, every time the laws, rules, or the like, are revised, or at any timing.

The area identification unit 23 identifies an area corresponding to the current position of the vehicle. The area identification unit 23 identifies an area corresponding to the current position of the vehicle based on the position information that is acquired by the position information acquisition unit 21 and the map information containing information that makes it possible to identify the border of a given area on a map. In the present embodiment, the area identification unit 23 identifies an area corresponding to the current position of the vehicle based on the map information that the map information storage unit 12 stores and the position information that is acquired by the position information acquisition unit 21. The area identification unit 23 identifies an area corresponding to the latitude and longitude that the position information of the current position of the vehicle presents from the map information that the map information storage unit 12 stores. For example, the area identification unit 23 identifies areas, such as "State AA in Country A" and "State AB in Country A", according to the position information. The area identification unit 23 identifies, as the area, a region representing the given area where laws, rules, or the like are established.

The determination table update unit 24 updates the determination table that is stored in the determination table storage unit 13. The determination table update unit 24, for example, updates the data every time the control on the shooting and recording function of the vehicle recording device 10 is changed in the area or at any timing.

Based on the determination table that specifies control on the function of the vehicle recording device 10 with respect to each area, the determination unit 25 determines control on the function of the vehicle recording device 10 in the area of the vehicle that is identified by the area identification unit 23. In the present embodiment, from the determination table that the determination table storage unit 13 stores, the determination unit 25 determines whether shooting and recording performed by the vehicle recording device 10 are permitted in the area of the vehicle that is identified by the area identification unit 23.

For example, when the area that is identified by the area identification unit 23 is "State C in Country B", the determination unit 25 determines that "shooting and recording are permitted". For example, when the area identified by the area identification unit 23 is "State D in Country B", the determination unit 25 determines that "shooting and recording are not permitted". For example, when the area identified by the area identification unit 23 is "State AA in Country A", the determination unit 25 determines that "shooting and recording are permitted".

The determination unit 25 may determine control on the function of the vehicle recording device 10 in the area of the vehicle that is identified by the area identification unit 23 based on setting data that the setting data storage unit 14 stores in addition to the determination table. For example, in the case where "shooting and recording are permitted" in "Country A" according to the setting data even when "shooting and recording are not permitted" in "Country A" according to the determination table, the determination unit 25 may determine that "shooting and recording are permitted", putting priority to the setting data.

The function controller 26 controls the function of the vehicle recording device 10 based on the result of the determination made by the determination unit 25. In the present embodiment, the function controller 26 controls the start and end of shooting and recording performed by the vehicle recording device 10 based on the result of the determination made by the determination unit 25.

Using FIG. 3, a flow of a process in the vehicle electronic device control device 20 will be described next. FIG. 3 is a flowchart illustrating an example of the flow of the process in the vehicle electronic device control device 20 according to the fist embodiment. While the vehicle recording device 10 is being on, the position information acquisition unit 21 keeps acquiring the position information presenting the current position of the vehicle. The vehicle recording device 10 executes the process of the flowchart illustrated in FIG. 3 at given intervals of time or at given intervals of distances of travel.

By the area identification unit 23, the vehicle electronic device control device 20 identifies an area corresponding to the current position of the vehicle (step S101). More specifically, based on the map information that the map information storage unit 12 stores and the position information that is acquired by the position information acquisition unit 21, the area identification unit 23 identifies an area corresponding to the current position of the vehicle. The vehicle electronic device control device 20 goes to step S102.

By the determination unit 25, the vehicle electronic device control device 20 determines whether shooting and recording performed by the vehicle recording device 10 are permitted (step S102). More specifically, based on the determination table that the determination table storage unit 13 stores, the determination unit 25 determines whether shooting and recording performed by the vehicle recording device 10 are permitted in the area of the vehicle that is identified by the area identification unit 23. The vehicle electronic device control device 20 goes to step S103.

By the function controller 26, the vehicle electronic device control device 20 has control on the vehicle recording device 10 on whether shooting and recording are permitted (step S103). More specifically, when the determination unit 25 determines that "shooting and recording are permitted", the function controller 26 outputs a control signal to the vehicle recording device 10 such that the vehicle recording device 10 performs shooting and recording. When the determination unit 25 determines that "shooting and recording are not permitted", the function controller 26 outputs a control signal to the vehicle recording device 10 such that the vehicle recording device 10 stops shooting and recording. The vehicle electronic device control device 20 ends the process.

As described above, the vehicle recording device 10 determines control on the function of the vehicle recording device 10 according to the area corresponding to the current position of the vehicle. Based on the result of the determination, the vehicle recording device 10 controls the shooting and recording function.

As described above, in the present embodiment, it is possible to determine control on the shooting and recording function of the vehicle recording device 10 according to the area corresponding to the current position of the vehicle based on the determination table. In the present embodiment, it is possible to automatically control the shooting and recording function of the vehicle recording device 10 according to the area corresponding to the current position of the vehicle based on the result of the determination. More specifically, in the present embodiment, when the vehicle is positioned in an area where "shooting and recording are permitted", it is possible to perform control such that shooting and recording are performed. In the present embodiment, when the vehicle is positioned in an area where "shooting and recording are not permitted", it is possible to perform control such that shooting and recording are not performed.

As described above, when the function of the vehicle electronic device is regulated by laws corresponding to the area, it is possible to perform appropriate control automatically. According to the present embodiment, it is possible to perform appropriate control automatically without checking the area or automatically performing control by the user.

### Second Embodiment

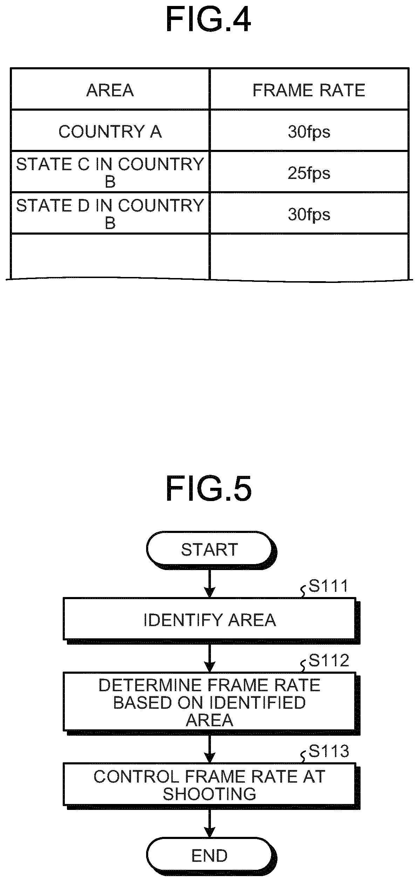

With reference to FIG. 4 and FIG. 5, the vehicle recording device 10 according to the present embodiment will be described. FIG. 4 is a diagram illustrating an example of a determination table and is a diagram illustrating a determination table that specifies a frame rate with respect to each area. FIG. 5 is a flowchart illustrating an example of a flow of a process in the vehicle electronic device control device 20 according to a second embodiment. The basic configuration of the vehicle recording device 10 is the same as that of the vehicle recording device 10 of the first embodiment. In the following description, the same components as those of the vehicle recording device 10 are denoted with the same reference numerals or corresponding reference numerals and detailed description thereof will be omitted. In the present embodiment, the determination table that the determination table storage unit 13 stores, the camera 15, and the process in the vehicle electronic device control device 20 are different from those of the first embodiment.

When the frame rate at shooting synchronizes with a period of blinking of LED traffic lights that is determined by an alternate current frequency of the area, LED traffic lights are displayed as being off according to captured video data although the LED traffic lights are on actually. Thus, in the present embodiment, the frame rate at shooting is set at an appropriate frame rate that does not synchronize with the alternate current frequency of the area.

The determination table storage unit 13 is a database that stores a determination table that specifies control on a frame rate at shooting performed by the vehicle recording device 10 with respect to each area. In the determination table, data that makes it possible to determine a frame rate that does not synchronize with the period of blinking of LED traffic lights is stored according to the alternate current frequency of the area. The determination table storage unit 13 stores an appropriate frame rate at shooting at which LED traffic lights are not displayed as being off according to captured video data although LED traffic lights are actually on.

The determination table, for example, stores the fact that the frame rate is "30 fps" in the area "Country A", the frame rate is "25 fps" in the area "State C in Country B", and the frame rate is "30 fps" in the area "State D in Country B".

In the camera 15, the frame rate at shooting is controlled by the function controller 26. More specifically, the frame rate of the camera 15 at shooting is controlled based on a control signal from the function controller 26.

The determination unit 25 determines a frame rate at shooting performed by the vehicle recording device 10 in the area of the vehicle based on the determination table that the determination table storage unit 13 stores.

The function controller 26 controls the frame rate at shooting performed by the vehicle recording device 10 based on the result of the determination made by the determination unit 25.

Using FIG. 5, the flow of the process in the vehicle electronic device control device 20 will be described next. In the process at step S111, the same process as that at step S101 in the flowchart illustrated in FIG. 3 is performed.

By the determination unit 25, the vehicle electronic device control device 20 determines a frame rate at shooting performed by the vehicle recording device 10 (step S112). More specifically, based on the determination table that the determination table storage unit 13 stores, a frame rate at shooting performed by the vehicle recording device 10 in the area of the vehicle is determined. The vehicle electronic device control device 20 goes to step S113.

By the function controller 26, the vehicle electronic device control device 20 has control on the vehicle recording device 10 on the frame rate at shooting (step S113). More specifically, the function controller 26 outputs a control signal to the camera 15 such that the camera 15 shoots at the frame rate determined by the determination unit 25. The vehicle electronic device control device 20 ends the process.

As described above, in the present embodiment, based on the determination table, it is possible to determine control on the frame rate at shooting by the vehicle recording device 10 according to the area corresponding to the current position of the vehicle. In the present embodiment, it is possible to automatically control the frame rate at shooting performed by the vehicle recording device 10 according to the area corresponding to the current position of the vehicle based on the result of the determination. According to the present embodiment, it is possible to automatically control the frame rate at shooting performed by the vehicle recording device 10 such that the frame rate does not synchronize with the period of blinking of LED traffic lights that is determined by the alternate current frequency of the area. According to the present embodiment, it is possible to inhibit the LED traffic lights from being displayed as being off according to the captured video data although LED traffic lights are on actually.

### Third Embodiment

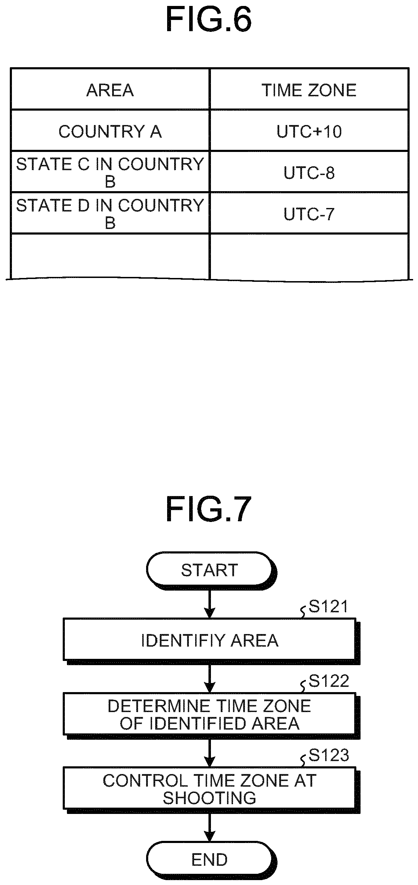

With reference to FIG. 6 and FIG. 7, the vehicle recording device 10 according to the present embodiment will be described. FIG. 6 is a diagram illustrating an example of a determination table and is a diagram illustrating a determination table that specifies a time zone with respect to each area. FIG. 7 is a flowchart illustrating an example of a flow of a process in the vehicle electronic device control device 20 according to a third embodiment. The basic configuration of the vehicle recording device 10 is the same as that of the vehicle recording device 10 of the first embodiment. In the present embodiment, the determination table that the determination table storage unit 13 stores, the camera 15, and the process in the vehicle electronic device control device 20 are different from those of the first embodiment.

The determination table storage unit 13 is a database that stores a determination table that specifies a time zone of a clock that the vehicle recording device 10 manages with respect to each area. In the determination table, data that makes it possible to determine a time zone corresponding to an area is stored.

The determination table, for example, stores the fact that the time zone in the area "Country A" is "UTC+10", the time zone in the area "State C in Country B" is "UTC-8", the time zone in "State D in Country B" is "UTC-7", etc.

In the camera 15, the time zone at shooting is controlled by the function controller 26. More specifically, once the time zone of the clock that the vehicle recording device 10 manages is controlled by the function controller 26, the camera 15 records the current local time presented by the clock as a time of shooting.

Based on the determination table that the determination table storage unit 13 stores, the determination unit 25 determines a time zone of the clock that the vehicle recording device 10 manages in the area of the vehicle.

The function controller 26 controls the time zone of the clock that the vehicle recording device 10 manages based on the result of the determination made by the determination unit 25.

Using FIG. 7, the flow of the process in the vehicle electronic device control device 20 will be described next. In the process at step S121, the same process as that at step S101 in the flowchart illustrated in FIG. 3 is performed.

By the determination unit 25, the vehicle electronic device control device 20 determines a time zone of the clock that the vehicle recording device 10 manages (step S112). More specifically, based on the determination table that the determination table storage unit 13 stores, a time zone of the clock that the vehicle recording device 10 manages in the area of the vehicle is determined. The vehicle electronic device control device 20 goes to step S123.

By the function controller 26, the vehicle electronic device control device 20 has control on the vehicle recording device 10 on the time zone of the clock (step S123). More specifically, the function controller 26 adjusts the local time of the clock that the vehicle recording device 10 manages to the time zone that is determined by the determination unit 25. The local time of the clock that the vehicle recording device 10 manages is controlled and thus the camera 15 records the local time as the time of shooting. The vehicle electronic device control device 20 ends the process.

As described above, in the present embodiment, it is possible to determine the time zone of the clock that the vehicle recording device 10 manages according to the area corresponding to the current position of the vehicle based on the determination table. In the present embodiment, it is possible to automatically control the time zone of the clock that the vehicle recording device 10 manages according to the area corresponding to the current position of the vehicle based on the result of the determination.

### Fourth Embodiment

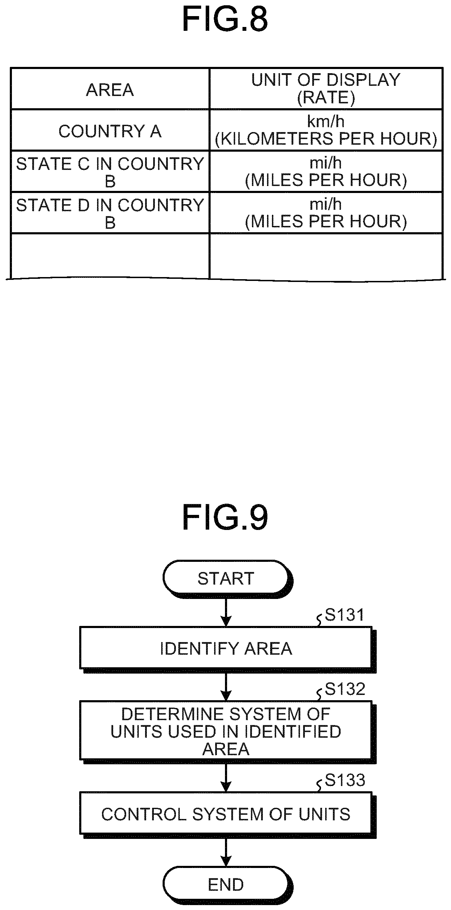

With reference to FIG. 8 and FIG. 9, the vehicle recording device 10 according to the present embodiment will be described. FIG. 8 is a diagram illustrating an example of a determination table and is a diagram illustrating a determination table that specifies a unit of rate with respect to each area. FIG. 9 is a flowchart illustrating an example of a flow of a process in the vehicle electronic device control device 20 according to a fourth embodiment. The basic configuration of the vehicle recording device 10 is the same as that of the vehicle recording device 10 of the first embodiment. In the present embodiment, the determination table that the determination table storage unit 13 stores, the camera 15, and the process in the vehicle electronic device control device 20 are different from those of the first embodiment.

The determination table storage unit 13 is a database that stores a determination table that specifies a system of units that the vehicle recording device 10 uses with respect to each area. In the present embodiment, the determination table storage unit 13 is a database in which the vehicle recording device 10 stores the determination table that specifies a system of units, such as distances or rates, with respect to each area. In the determination table, data that makes it possible to determine a system of units corresponding to an area is stored.

The determination table, for example, stores the fact with respect to the unit of rates that the unit of rates in the area "Country A" is "km/h (kilometers per hour)", the unit of rates in the area "State C in Country B" is "mi/h (miles per hour)", the unit of rates in the area "State D in Country B" is "mi/h (miles per hour)", etc. The unit of rates in the area "State C in Country B" and the area "State D in Country B" may be "mph (Miles Per Hour).

In the camera 15, the system of units is controlled by the function controller 26. More specifically, in the camera 15, the system of units according to which a distance or a rate is calculated, recorded and displayed is controlled.

The determination unit 25 determines a system of unit according to which the vehicle recording device 10 calculates, records and displays a distance or a rate in the area of the vehicle is controlled based on the determination table that the determination table storage unit 13 stores.

The function controller 26 controls the system of units that the vehicle recording device 10 uses based on the result of the determination made by the determination unit 25.

Using FIG. 9, the flow of the process in the vehicle electronic device control device 20 will be described next. In the process at step S131, the same process as that at step S101 in the flowchart illustrated in FIG. 3 is performed.

By the determination unit 25, the vehicle electronic device control device 20 determines a system of units that the vehicle recording device 10 uses (step S132). More specifically, based on the determination table that the determination table storage unit 13 stores, a system of units that the vehicle recording device 10 uses for a distance or rate in the area of the vehicle is determined. The vehicle electronic device control device 20 goes to step S133.

By the function controller 26, the vehicle electronic device control device 20 has control on the vehicle recording device 10 on the system of units (step S133). More specifically, the function controller 26 outputs a control signal to the camera 15 such that a distance, a rate, or the like is calculated, recorded or displayed according to the system of units that is determined by the determination unit 25. The vehicle electronic device control device 20 ends the process.

As described above, in the present embodiment, it is possible to determine the system of units that the vehicle recording device 10 uses according to the area corresponding to the current position of the vehicle based on the determination table. In the present embodiment, it is possible to automatically control the system of units that the vehicle recording device 10 uses according to the area corresponding to the current position of the vehicle based on the result of the determination.

### Fifth Embodiment

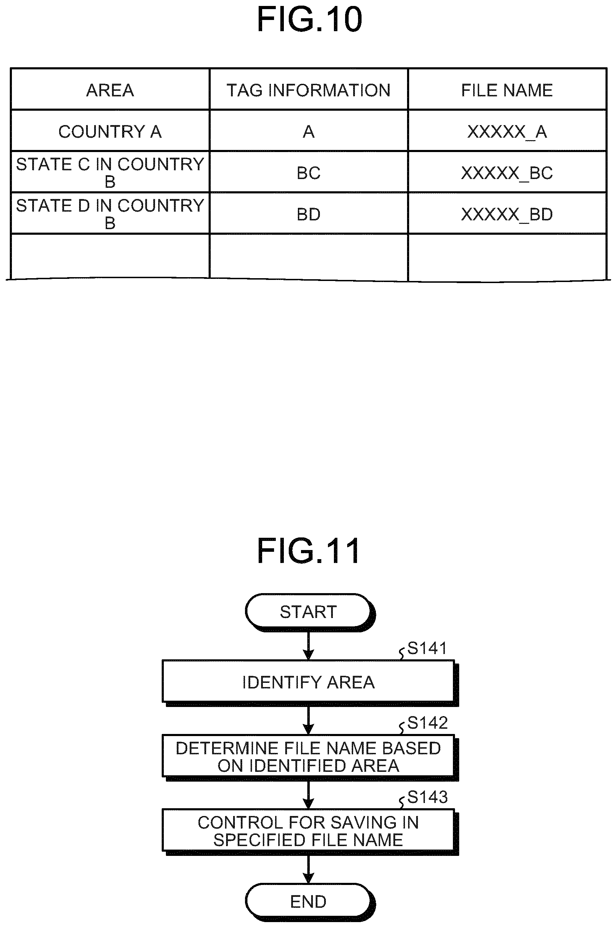

With reference to FIG. 10 and FIG. 11, the vehicle recording device 10 according to the present embodiment will be described. FIG. 10 is a diagram illustrating an example of a determination table and is a diagram illustrating a determination table that specifies a file name with respect to each area. FIG. 11 is a flowchart illustrating an example of a flow of a process in the vehicle electronic device control device 20 according to a fifth embodiment. The basic configuration of the vehicle recording device 10 is the same as that of the vehicle recording device 10 of the first embodiment. In the present embodiment, the determination table that the determination table storage unit 13 stores, the camera 15, and the process in the vehicle electronic device control device 20 are different from those of the first embodiment.

The determination table storage unit 13 is a database that stores a determination table that specifies control on tag information and a file name or a folder name of video data that the vehicle recording device 10 saves with respect to each area. In the determination table, data that makes it possible to determine tag information and a file name or a folder name corresponding to an area is stored.

The determination table stores the fact that tag information (area name) that is saved in the area "Country A" is "A" representing the country name, tag information (area name) that is saved in the area "State C in Country B" is "BC" representing the country name and the state name, and tag information (area name) that is saved in the area "State D in Country B" is "BD" representing the country name and the state name.

The determination table, for example, stores the fact that the file or folder name that is saved in the area "Country A" is "XXXX_A" with "A" representing the country name and being added at the end, the file or folder name that is saved in the area "State C in Country B" is "XXXX_BC" with "BC" representing the country name and the state name and being added at the end, and the file or folder name that is saved in the area "State D in Country B" is "XXXX_BD" with "BD" representing the country name and the state name and being added at the end.

In the camera 15, the tag information and the file name or folder name at saving of video data is controlled by the function controller 26. More specifically, the camera 15 is controlled such that video data is saved in tag information and a file name or folder name based on a control signal from the function controller 26.

Based on the determination table that the determination table storage unit 13 stores, the determination unit 25 determines tag information and a file name or folder name at saving of video data by the vehicle recording device 10 in the area of the vehicle.

Based on the result of the determination made by the determination unit 25, the function controller 26 controls the tag information and the file name or folder name at saving of video data by the vehicle recording device 10.

Using FIG. 11, the flow of the process in the vehicle electronic device control device 20 will be described next. In the process at step S141, the same process as that at step S101 in the flowchart illustrated in FIG. 3 is performed. The case where a file name is controlled will be described as an example.

By the determination unit 25, the vehicle electronic device control device 20 determines a file name at saving of video data by the vehicle recording device 10 (step S142). More specifically, based on the determination table that the determination table storage unit 13 stores, a file name at saving of video data by the vehicle recording device 10 in the area of the vehicle is determined. The vehicle electronic device control device 20 goes to step S143.

By the function controller 26, the vehicle electronic device control device 20 has control on the vehicle recording device 10 on the file name at saving of video data (step S143). More specifically, the function controller 26 outputs a control signal to the camera 15 such that video data is saved in the file name that is determined by the determination unit 25. The vehicle electronic device control device 20 ends the process.

As described above, in the embodiment, it is possible to determine control on the tag information and the file name or folder name in the vehicle recording device 10 according to the area corresponding to the current position of the vehicle based on the result of the determination. In the present embodiment, based on the result of the determination, it is possible to automatically control the tag information and the file name or folder name in the vehicle recording device 10 according to the area corresponding to the current position of the vehicle.

### Sixth Embodiment

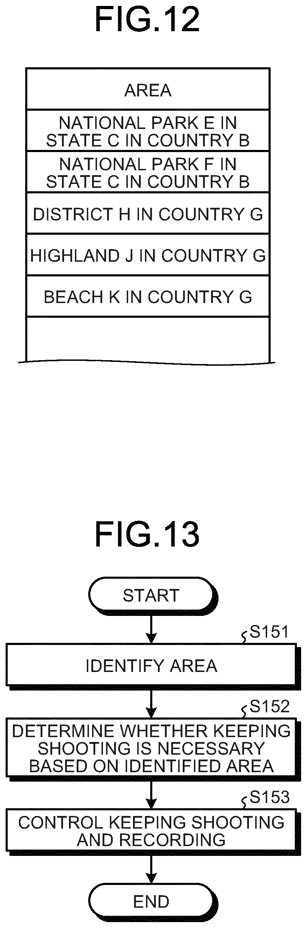

With reference to FIG. 12 and FIG. 13, the vehicle recording device 10 according to the present embodiment will be described. FIG. 12 is a diagram illustrating an example of a determination table and is a diagram illustrating a determination table that specifies areas where shooting is kept performed. FIG. 13 is a flowchart illustrating an example of a flow of a process in the vehicle electronic device control device 20 according to a sixth embodiment. The basic configuration of the vehicle recording device 10 is the same as that of the vehicle recording device 10 of the first embodiment. In the present embodiment, map information that the map information storage unit 12 stores, the determination table that the determination table storage unit 13 stores, the camera 15, and the process in the vehicle electronic device control device 20 are different from those of the first embodiment.

The area, for example, refers to a region, such as a country, a prefecture, a municipality, a state, a district, a highland or a beach, a region, such as a park or a driving route with a superb view, or an area of a tourist spot, such as a park, on which it is specified that shooting is kept performed. The area is an area where a superb view is highly likely to be shot.

The area may be, for example, a region, such as a country, a prefecture, a municipality, a state, a district, a highland or a beach, a region, such as a park or a driving route with a superb view, or an area of a tourist spot, such as a park, on which a shooting condition on a resolution of a video, an angle of view, telescopy, or the like at shooting, is specified. More specifically, for example, the area mat be an area where the resolution at shooting is higher than usual or an area where the resolution is lower than usual. For example, the area may be an area where the angle of view at shooting is wider than usual or an area where the angle of view is narrower than usual. For example, the area may be an area where shooting is performed by telescopy.

The determination table storage unit 13 is a database that stores a determination table that specifies whether keeping shooting by the vehicle recording device 10 is necessary according to each area. In the determination table, data that makes it possible to determine whether keeping shooting is necessary according to the area is stored. The determination table storage unit 13 may store a determination table that specifies a shooting condition, such as a resolution of a video, an angle of view, or telescopy at shooting by the vehicle recording device 10, with respect to each area.

The determination table stores an area where shooting is kept performed. The determination table, for example, stores, as areas where shooting is kept performed, an area "National Park E in State C in Country B", an area "National Park F in State C in Country B", an area "District H in Country G", an area "Highland J in Country G", an area "Beach K in Country G", etc. All the areas stored in the determination table are areas where superb views are highly likely to be shot.

In the camera 15, keeping shooting is controlled by the function controller 26. More specifically, in the camera 15, starting and stopping keeping shooting is controlled based on a control signal from the function controller 26.

Based on the determination table that the determination table storage unit 13 stores, the determination unit 25 determines whether keeping shooting by the vehicle recording device 10 is necessary in the area of the vehicle. Based on the determination table that the determination table storage unit 13 stores, the determination unit 25 may determine the shooting condition on shooting by the vehicle recording device 10 in the area of the vehicle.

Based on the result of the determination by the determination unit 25, the function controller 26 has control on whether keeping shooting by the vehicle recording device 10 is necessary. The function controller 26 may control the shooting condition on shooting by the vehicle recording device 10 based on the result of the determination by the determination unit 25.

Using FIG. 13, the flow of a process in the vehicle electronic device control device 20 will be described next. In the process at step S151, the same process as that at step S101 in the flowchart illustrated in FIG. 3 is performed. The case where control on whether keeping shooting by the vehicle recording device 10 is necessary is performed according to the area of the vehicle will be described.

By the determination unit 25, the vehicle electronic device control device 20 determines whether keeping shooting by the vehicle recording device 10 is necessary (step S152). More specifically, based on a determination table that the determination table storage unit 13 stores, it is determined whether keeping shooting by the vehicle recording device 10 is necessary in the area of the vehicle. The vehicle electronic device control device 20 goes to step S153.

When it is determined that keeping shooting is necessary at step S152, by the function controller 26, the vehicle electronic device control device 20 controls the vehicle recording device 10 on starting or stopping keeping shooting and recording (step S153). More specifically, the function controller 26 outputs a control signal to the camera 15 according to the determination on whether keeping shooting is necessary that is made by the determination unit 25. The vehicle electronic device control device 20 ends the process.

As described above, in the present embodiment, it is possible to determine whether keeping shooting by the vehicle recording device 10 is necessary and the shooting condition on shooting according to the area corresponding to the current position of the vehicle based on the determination table. In the present embodiment, it is possible to automatically control keeping shooting by the vehicle recording device 10 or automatically control the shooting condition on shooting based on the result of the determination.

The vehicle recording device 10 according to the disclosure has been described and the vehicle recording device 10 may be carried out in various different modes in addition to the above-described embodiments.

Each component of the vehicle recording device 10 illustrated in the drawings is functionally schematic and need not necessarily be physically configured as illustrated in the drawings. In other words, a specific mode of each device is not limited to those illustrated in the drawings, and all or part of the components may be functionally or physically distributed or integrated in a given unit according to the load of processing or usage of each device.

The configuration of the vehicle recording device 10 is, for example, implemented by a program that is loaded in a memory as software. In the above-described embodiments, the configuration is described as functional blocks that are implemented by association of these sets of hardware or hardware. In other words, these functional blocks can be implemented in various forms using only hardware, software, or a combination of hardware and software.

The components described above include those easily assumed by those skilled in the art and those substantially the same. Furthermore, the above-described components can be combined as appropriate. Various omissions, replacements and changes of the components can be made within the scope of the disclosure. In other words, it only need to be a vehicle electronic device control device that performs control according to laws that are established with respect to each area.

The vehicle recording device 10 has been described as an example of the vehicle electronic device; however, there is no limitation thereto. The vehicle electronic device may be a navigation system, an audio device, a display device, or the like. The vehicle electronic device includes an electronic device that is mounted on a vehicle and is used and, when a portable terminal device, such as a smartphone, is mounted on a vehicle and is used, the portable terminal device is included in the vehicle electronic device.

The vehicle electronic device control device 20 may acquire information on the current position of the vehicle from an external navigation system.

### Industrial Applicability

It is possible to use a vehicle electronic device control device, a vehicle electronic device, a vehicle control method and a program according to the disclosure to, for example, what is called a navigation system. Reference Signs List

- 10: Vehicle recording device (vehicle electronic device)
- 11: GPS receiver
- 12: Map information storage unit
- 13: Determination table storage unit
- 15: Camera (imaging unit)
- 16: Storage
- 20: Vehicle electronic device control device
- 21: Position information acquisition unit
- 23: Area identification unit
- 25: Determination unit
- 26: Function controller

## Claims

1. A vehicle electronic device control device comprising:
a position information acquisition unit configured to acquire position information of a current position of a vehicle;
an area identification unit configured to identify an area corresponding to the current position of the vehicle based on the position information acquired by the position information acquisition unit and map information including information for identifying a border of a given area on a map; and
a determination unit configured to determine, based on a determination table in which control on a function of a vehicle electronic device is specified for each area, control on a function of the vehicle electronic device in the area of the vehicle identified by the area identification unit.

2. The vehicle electronic device control device according to claim 1, comprising a function controller configured to control the function of the vehicle electronic device based on a determination result from the determination unit.

3. The vehicle electronic device control device according to claim 1 or 2, wherein the determination unit is configured to determine, based on a determination table in which whether the vehicle electronic device serving as a vehicle recording device is permitted to perform shooting and recording is specified for each area, whether the vehicle recording device is permitted to perform shooting and recording in the area of the vehicle.

4. The vehicle electronic device control device according to any one of claims 1 to 3, wherein the determination unit is configured to determine, based on a determination table in which a frame rate for shooting of the vehicle electronic device serving as a vehicle recording device is specified for each area, a frame rate at which shooting is to be performed by the vehicle recording device in the area of the vehicle.

5. The vehicle electronic device control device according to any one of claims 1 to 4, wherein the determination unit is configured to determine, based on a determination table in which a time zone of time of the vehicle electronic device serving as a vehicle recording device is specified for each area, a time zone of time of the vehicle recording device to be set in the area of the vehicle.

6. The vehicle electronic device control device according to any one of claims 1 to 5, wherein the determination unit is configured to determine, based on a determination table in which a system of units to be used by the vehicle electronic device serving as a vehicle recording device is specified for each area, a system of units to be used by the vehicle recording device in the area of the vehicle.

7. The vehicle electronic device control device according to any one of claims 1 to 6, wherein the determination unit is configured to determine, based on a determination table in which whether keeping shooting is to be performed by the vehicle electronic device serving as a vehicle recording device is specified for each area, whether keeping shooting is to be performed by the vehicle recording device in the area of the vehicle.

8. The vehicle electronic device control device according to any one of claims 1 to 7, wherein the determination unit is configured to determine tag information and a file name or a folder name of data to be saved by the vehicle electronic device serving as a vehicle recording device in the area of the vehicle.

9. The vehicle electronic device control device according to any one of claims 1 to 8, wherein the area identification unit is configured to identify, as the area, a region where laws, rules, or the like, are established.

10. A vehicle electronic device comprising:
the vehicle electronic device control device according to any one of claims 1 to 9; and
an imaging unit configured to shoot surroundings of the vehicle.

11. A vehicle control method comprising:
a position information acquisition step of acquiring position information of a current position of a vehicle;
an area identification step of identifying an area corresponding to the current position of the vehicle based on the position information acquired at the position information acquisition step and map information including information for identifying a border of a given area on a map; and
a determination step of determining, based on a determination table in which control on a function of a vehicle electronic device is specified for each area, control on a function of the vehicle electronic device in the area of the vehicle identified at the area identification step.

12. A program for causing a computer that runs as a vehicle electronic device control device to execute:
a position information acquisition step of acquiring position information of a current position of a vehicle;
an area identification step of identifying an area corresponding to the current position of the vehicle based on the position information acquired at the position information acquisition step and map information including information for identifying a border of a given area on a map; and
a determination step of determining, based on a determination table in which control on a function of a vehicle electronic device is specified for each area, control on a function of the vehicle electronic device in the area of the vehicle identified at the area identification step.
